# EUROPEAN PATENT SPECIFICATION

(11) **EP 3 452 736 B1**
(45) Date of publication and mention of the grant of the patent: **10.01.2024**
(21) Application number: 17725723.5
(22) Date of filing: 03.05.2017
(51) Int. Cl.: F16D 65/00, F16D 65/097

(54) **HYDRAULIC DISC BRAKE ASSEMBLY AND PAD ASSEMBLY FOR SAME**
HYDRAULISCHE SCHEIBENBREMSANORDNUNG UND BELAGANORDNUNG DAFÜR
ENSEMBLE DE FREIN À DISQUE HYDRAULIQUE ET ENSEMBLE DE PLAQUETTE POUR CELUI-CI

(30) Priority: 05.05.2016 GB 201607866
(43) Date of publication of application: 13.03.2019
(73) Proprietor: ZF Automotive UK Limited, Solihull, West Midlands B90 8BG (GB)
(72) Inventor: CLENT, Mark, Willenhall West Midlands WV13 3DB (GB)
(74) Representative: Barker Brettell LLP
(86) International application number: PCT/GB2017/051238
(87) International publication number: WO 2017/191451

(56) References cited:
- JP-A- 2007 321 869
- JP-A- 2012 215 279
- US-A1- 2005 241 897
- US-A1- 2014 360 822

## Description

The invention is related to the technical area of hydraulic disc brakes used in automotive vehicle braking systems.

Hydraulic disc brakes comprise a pair of brake pads arranged at opposite sides of a rotating brake disc which can be pressed onto the disc by a force generated by a hydraulically and/or electromechanically driven piston in order to decelerate the vehicle. The piston is typically driven by pressurized hydraulic fluid or by an electric motor acting through a gear set, or other source of pressure.

JP 2007321869 discloses a known brake caliper assembly.

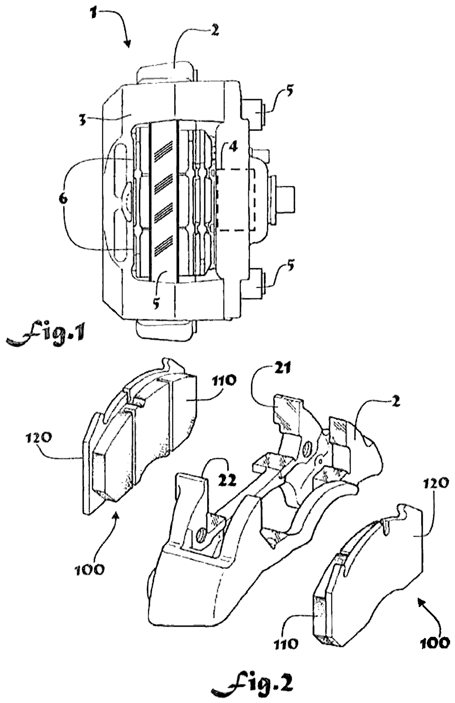

The invention in particular relates to sliding caliper disc brakes 1 of the kind as illustrated in Figure 1 and Figure 2 of the accompanying drawings. A sliding caliper disc brake typically comprise a support bracket 2 rigidly mounted to an axle or other fixed part of the vehicle on which a caliper 3 is slidingly mounted supported by an axially moveable guide system. The guide system may typically comprise two guide pins 5 fixed to the caliper 3 which each extend, when the caliper is mounted to the bracket 2, into a respective axially extending guide bore arranged in the bracket 2. The bracket 2 holds a pair of brake pad assemblies 100. The bracket includes radial abutment sections 21, 22 for them used to transfer the tangentially directed reaction forces from the pads into the bracket 2 during frictional engagement with a rotating brake disc 5.

At least one piston 4 is provided in a bore in the caliper and acts on a back face of one of the pad assemblies to urge the front face of the pad assembly into engagement with the disc. The pad on the other side of the disc is then compressed between the disc and a reaction surface 6 on the opposing side of the caliper that reacts the forces applied by the piston 4.

The brake pad assembly 100 consists of a friction lining 110 on the front face attached to a metal back plate 120. The function of the back plate is to support the friction pad and to transfer the reaction forces into the surrounding bracket by abutment means 21, 22. To reduce unwanted noise output especially a so called "squeal" noise the back face of the back plate of the pad assembly may be provided with a riveted and/or bonded damping shim. This is secured to the back face of the pad, in a position between the pad and piston, or pad and reaction face 6, depending which side of the disc the pad is located.

The damping shim may comprise an inner shim and an outer- or cover-shim. The inner shim is bonded and/or riveted in place onto the back face of the backing plate and is provided with a low friction PTFE or stainless steel face on its back face. The outer or cover shim overlays this and abuts the back face of the inner shim and comprises a stainless steel main body. This preferably comprises a rubber layer 151 at its back face for contact of the hydraulically drive piston 4 or oppositely arranged caliper housing contact area 6 used to press the pads 100 against the rotating disc 5. The cover shim is secured to the backing plate of the pad assembly by clips. The tangential spacing between the clips 153 that engage the tangential ends faces of the backing plate is large enough to ensure the cover shim can slide in a tangential direction over the surface of the damping shim.

By tangential we mean movement of the brake pad assembly in a direction that follows a point on the brake disc as the brake disc rotates about its axis.

An object of the present invention is to overcome certain limitations of the above form of brake assembly in particularly that may arise during operation at low braking forces or following incorrect assembly of the parts of the brake assembly.

According to a first aspect the invention provides a hydraulic brake caliper assembly according to claim 1.

By tangential we mean a general approximately circumferential movement of the backing plate from side to side, and which will generally be a linear side to side movement rather than an arcuate circumferential movement about the axis of rotation of the brake disc. However, the word tangential in this application may therefore be interpreted broadly and generally to cover a side to side movement which may also follow a circumference of the brake disc, and as such will not follow a straight line through the whole of the movement and the skilled person will understand how to interpret such a term.

The resilient clips may be configured in use to allow the backing plate to move over a range of tangential positions relative to the outer shim, and in which the resilient clips are arranged such that when the brake pad is not being urged into frictional engagement with the brake disc the outer shim is actively urged by the resilient clips into a predetermined position that lies between the ends of the available range of tangential positions.

The predetermined position may be one in which any additional fixing clips provided on the outer shim at the top or bottom edge are spaced apart from any radial projections of the backing plate. This ensures that those clips will not impede sliding of the backing plate over the outer shim.

There may be a resilient clip associated with each end of the backing plate, and the clips may contact the backing plate at all times. When deformed the clips apply a generally tangential force to the backing plate.

The range of movement achievable while resiliently deflecting the clips may be at least equal to the available tangential range of positions of the backing plate between the abutment sections of the caliper.

The invention addresses problems with prior art damping shims. In a prior known arrangement which employs a sliding shim, the brake pad assembly may be located at a range of tangential positions bounded by the two rigid abutment sections 21,22. During initial braking the pad backing plate and inner shim will move tangentially to one side or the other relative to the outer shim.

For the brake pad backing plate to move tangentially, the friction between the inner shim and the outer shim must first be overcome. A certain level of braking force is needed before this occurs, the low friction coating being provided for the purpose of reducing the level of this force. The outer shim, with the rubber coating, of course grips the piston or reaction surface so it does not follow the movement of the inner shim and backing plate during this phase.

The applicant has appreciated that a problem may arise if the outer shim can be fitted onto the backing plate, or can move to a position, where there is contact between a tangentially rigid part of the outer shim and the backing plate. These parts typically include the clips on the top and bottom edges of the pad that prevent radial movement and which can strike radial edges of the backing plate. They also include the rigid clips that may be provided on the sides that limit the maximum tangential movement of the backing plate relative to the outer shim. This would prevent the pad from being able to slide relative to the outer shim towards the abutment sections at low brake pressures where the tangentially directed forces on the brake pad are low and the outer shim grips the piston. Of course, at higher pressures the outer shim will slide tangentially relative to the piston or reaction face of the caliper, dragged by the backing plate, allowing the pad to move but this may not be an acceptable behavior.

By providing resilient clips that achieve a degree of self centering of the outer shim relative to the backing plate within a range of movement, it can be assured that the backing plate will not contact a rigid part of the outer shim prior to engaging the abutment regardless of how it is initially fitted, ensuring the pad can slide to the rigid abutments at low pressures. The degree of self centering ensures there is always some room for the backing plate to move relative to the outer shim when the outer shim grips the piston.

The resilient clips may generate forces that are balanced so that the outer shim is to a degree partially or perfectly centralized relative to the backing plate within the available range of positions. The assembly may be arranged so that this is assured regardless of the relative tangential position of the backing plate and the abutments of the caliper.

The resilient clips are sufficiently resilient as to allow, during braking, for the backing plate to move to contact an abutment section, from any start position, without requiring any movement of the outer shim relative to the piston or reaction surface of the caliper. This ensures that the friction between the outer shim and piston or contact surface does not need to be overcome for the backing plate to complete its tangential movement.

For example, the resilient clips may each provide a resistance to tangential movement of the outer shim relative to the backing plate of less than the frictional force between the outer shim and the piston, or outer shim and reaction surface of the caliper.

The resilient clips may be permanently elastically deformed by the backing plate by arranging for the spacing between the resilient clips at rest prior to inserting the backing plate to be less than the relevant radial spacing between the portion of the backing plate that engage the resilient clips after insertion.

By centralized we may mean exactly in the centre of the range of movement, or simply that the outer shim is positioned somewhere within the range of movement where it is positively spaced from an end position, so there is always some movement available.

The range of movement of the outer shim relative to the backing plate may exceed the range of tangential movement of the backing plate between the abutment means.

The range of movement of the outer shim relative to the backing plate may be equal to the available tangential movement of the backing plate between the radial abutment sections.

The outer shim may comprise a metal plate defining a planar main body and the resilient clips may each comprise protruding metal fingers that each extend out of the plane of the generally planar main body of the shim towards the brake disc, that may engage with edge portions of the backing plate. These portions of the backing plate may comprise segments of the end faces of the backing plate.

There may be one resilient clip opposing tangential movement of the cover shim in each of the two opposed tangential directions. i.e. for forward and backwards rotation of the brake disc.

Alternatively, there may be two resilient clips opposing tangential movement in each direction, i.e. a total of at least four clips.

Each of the resilient clips may comprise a root portion that is connected at one end to the main body of the outer shim and extends away from the main body of the outer shim in a direction away from the backing plate and then turns back on itself to extend back past the main body to form a contact portion that protrudes from the main body in a direction towards the backing plate. The clip may therefore be generally U-shaped. Both the root portion and the contact portion may be resiliently flexible and as such define two leaf springs.

By providing a U-shaped clip the overall length of the clip from the root to the point where it acts upon the backing plate is longer than would be possible if the clip were straight from the outer shim to the backing plate, increasing the deflection that is achievable before the elastic limit of the clip is exceeded.

The root portion may extend generally orthogonally away from the main body of the outer shim. The root may extend in a direction away from the backing plate before the clip turns back on itself to extend in a direction towards the backing plate.

The contact portion may be straight or may include one or more folds defining changes in direction. These folds may assist with the ease of assembly of the outer shim onto the backing plate. The folds may make a relatively insignificant contribution to the ability of the contact portion to deflect, the major source of deflection being resilient bending of the clip along its length.

The width X2 of the resilient clip in the region where the root port ion transitions into the contact portion may be greater than the width of the contact portion and optionally greater than the width of the root portion. The thickness of the resilient clip may be uniform and may be the same as the thickness of a main body of the cover shim. This allows the outer shim and resilient clips to be integrally formed, for example from a single sheet of material using an appropriate process such as cold forming.

The arrangement of the resilient clip defining two leaf springs ensures there is no tangentially rigid portion of the resilient clip that can block the movement of the backing plate relative to the outer shim by placing the root clear of the backing plate for all positions of the outer shim. The greater length of the clip compared with a clip that was formed as one leaf spring also allows the resistance to deflection of the clip to be lower for a given thickness of material used to form the clip.

The resilience of the resilient clips, for instance the flex of the root and /or contact portion, should be selected to provide a minimal resistance to tangential movement of the pad relative to the shim.

The outer shim may include upper and lower clips that prevent the shim from separating from the pad during fitting of the brake pads.

The inner shim may comprise a plate which may be provided with a low friction PTFE or stainless steel face. It may typically comprise a steel main body with a rubber layer on the side facing the backplate.

The inner shim may be secured to the backing plate by an adhesive and/or by rivets or other fasteners. It is not able to move radially or tangentially
relative to the backing plate.

The outer shim may comprise a rigid plate, for instance a metal plate, with a low friction PTFE or a stainless steel surface that abuts the damping shim. This ensures that the outer shim can slide easily over the damping shim.

Additionally, an optional resilient layer, for instance of rubber, may be provided that is located between the rigid sheet of the outer shim and the piston or caliper housing contact area. This helps the outer shim to grip the piston, but should allow some movement of the outer shim relative to the piston under the forces of the resilient clips when the brakes are not being applied.

The outer shim may comprise a thin metal sheet, with the resilient clips being formed by deforming parts of the metal sheet out of the plane of the body of the sheet using a suitable manufacturing process.

The sheet may comprise a sheet of austenitic stainless steel or an equivalent material.

In addition to the resilient clips that control the tangential position of the outer shim relative to the backing plate, additional fixing clips may be provided that locate the outer shim at the top, at the bottom, or at the top and bottom of the backing plate. The fixing clips may be different to the resilient clips, in that the root of each of the fixing clips may extend from the main body of the cover shim directly towards the backing plate. The fixing clips may therefore provide a more positive end stop for any up and down (radial) movement of the backing plate relative to the carrier.

The fixing clips may be spaced from the backing plate by a clearance gap so that they do not impede the movement of the outer shim relative to the backing plate in a side-to-side tangential direction.

The brake assembly may comprise a sliding caliper type disc brake in which the caliper is slidingly secured to the support bracket by an axially moveable guide system. As such it may have a piston or pistons on one side of the disc only.

The guide system of the brake assembly may comprise two or more guide pins fixed to the caliper which each extend, when the caliper is mounted to the support bracket, into a respective axially extending guide bore arranged in the support bracket.

There will now be described, by way of example only, multiple embodiments of a disc brake assembly that each fall within the scope of the an aspect of the present invention with reference to and as illustrated in accompanying drawings of which:
Figure 1 illustrates a sliding caliper disc brake which may incorporate a brake pad assembly that falls within the scope of the present invention;
Figure 2 shows a bracket and the related brake pads attachment section
Figure 3 shows a first embodiment of a brake pad assembly that falls within the scope of one aspect of the present invention in a side view;
Figure 4 shows the brake pad assembly of Figure 3 in a front view ;
Figure 5 shows the brake pad assembly of Figure 3 in a perspective view ;
Figure 6 shows the cover shim of the brake pad assembly of Figure 3 in a front view;
Figure 7 Shows the cover shim of the first embodiment in a top view ;
Figure 8 shows the cover shim of the first embodiment in a side view ;
Figure 9 shows the cover shim of the first embodiment in a perspective view ;
Figure 10 shows the cover shim of the first embodiment prior to cold forming;
**Figure 11** shows a second embodiment of a brake pad assembly that falls within the scope of one aspect of the present invention in a side view
**Figure 12** shows the brake pad assembly of Figure 11 in a front view;
**Figure 13** shows the brake pad assembly of Figure 11 in a perspective view;
**Figure 14** shows the cover shim of the brake pad assembly of Figure 11 in a front view;
**Figure 15** shows the cover shim of the second embodiment in a top view;
**Figure 16** shows the cover shim of the second embodiment in a side view;
**Figure 17** shows the cover shim of the second embodiment in a perspective view;
**Figure 18** Shows the cover shim of the second embodiment prior to cold forming;
**Figure 19** shows a third embodiment of a brake pad assembly that falls within the scope of one aspect of the present invention in a side view;
**Figure 20** shows the brake pad assembly of Figure 19 in a front view;
**Figure 21** shows the brake pad assembly of Figure 19 in a perspective view;
**Figure 22** shows the cover shim of the brake pad assembly of Figure 19 in a front view;
**Figure 23** shows the cover shim of the third embodiment in a side view;
**Figure 24** shows the cover shim of the third embodiment in a top view;
**Figure 25** shows the cover shim of the third embodiment in a perspective view;
**Figure 26** shows the cover shim of the third embodiment prior to cold forming;
**Figure 27** shows a fourth embodiment of a brake pad assembly that falls within the scope of one aspect of the present invention in a side view;
**Figure 28** shows the brake pad assembly of Figure 27 in a front view;
**Figure 29** shows the brake pad assembly of Figure 27 in a perspective view;
**Figure 30** shows the cover shim of the fourth embodiment in a front view;
**Figure 31** shows the cover shim of the fourth embodiment in a side view;
**Figure 32** shows the cover shim of the fourth embodiment in a top view;
**Figure 33** shows the cover shim of the fourth embodiment in a perspective view; and
**Figure 34** shows the cover shim of the fourth embodiment prior cold forming.

A first embodiment of a hydraulic brake caliper assembly is illustrated in Figures 1 to 11 of the accompanying drawings. The caliper assembly comprises a support bracket, a caliper slidingly secured to the support bracket by an axially moveable guide system. A pair of brake pad assemblies is located on opposing sides of a brake disc (not shown). Each brake pad assembly comprising a backing plate having a top face, a bottom face and two tangentially spaced edges. A brake pad of friction material is rigidly secured to the backing plate. The caliper supports at least one piston which in use acts between one of the pads and the caliper to urge the brake pad into engagement with a surface of the brake disc.

During a braking operation, the reaction force between the brake pad and the rotating disc as the brake pad is pressed onto the rotating disc will tend to pull the brake pad assembly tangentially around in the direction of rotation of the disc. This is resisted by the presence of a pair of radial abutment sections that protrude from the bracket that engage with edges of the backing plate of each brake pad assembly. The abutments are located so that one of the abutment sections abuts the backing plate of the brake pad when the disc is rotating in a clockwise direction to transfer reaction forces applied to the brake pads by the brake disc into the caliper during frictional engagement of the pad with a rotating brake disc. When the disc is rotating in the opposite direction the other abutment will engage the brake pad assembly to perform this function. Because of dimensional tolerances and the need to easily insert and remove the brake pad assembly from the caliper during installation and replacement of worn out brake pads, the tangential spacing between the abutments slightly exceeds the tangential width of the brake pad assembly so that it will shuttle to and fro between the abutments during braking depending on whether the vehicle is travelling forwards or backwards during braking.

The backing plate is provided with an inner shim having an outer layer of low friction material that is secured to the side of the backing plate that faces away from the brake pad, and an outer, or cover, shim is provided that comprises a sheet of metal that is also covered with low friction material that contacts the low friction surface of the inner shim. The outer shim is secured to the backing plate by a plurality of clips and is able to move tangentially relative to the backing plate, sliding over the inner shim. The surface of the cover shim that faces the piston or caliper reaction surface is provided with a rubber coating so that it grips the piston or reaction surface. The rubber helps reduce unwanted brake squeal.

The clips 152 are designed in use to resiliently deflect to permit the outer shim and backing plate to move relative to each other into a range of different tangential positions. The resilient clips are arranged such that when the brake pad is not being urged into frictional engagement with the brake disc the outer shim is actively urged by the resilient clips into a position that lies between the extreme end positions of the range.

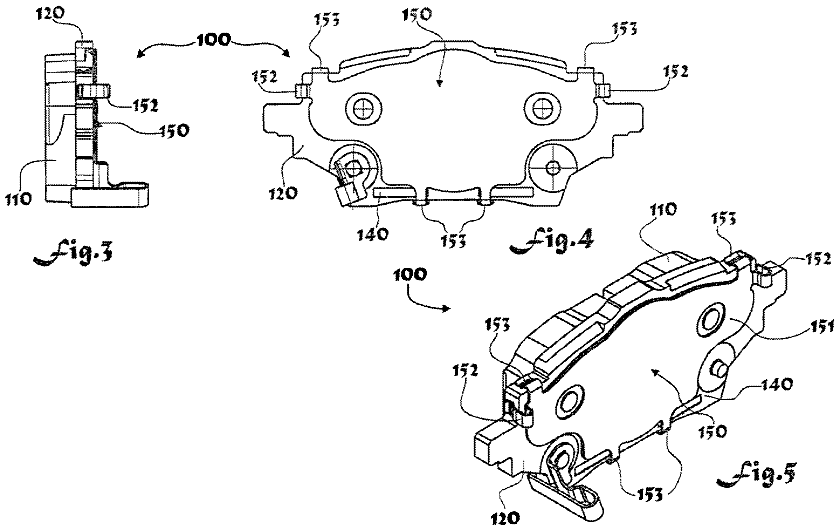

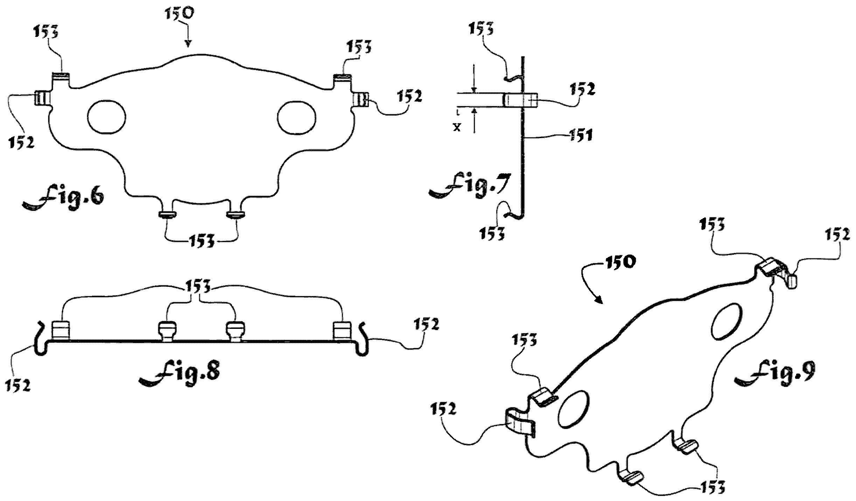

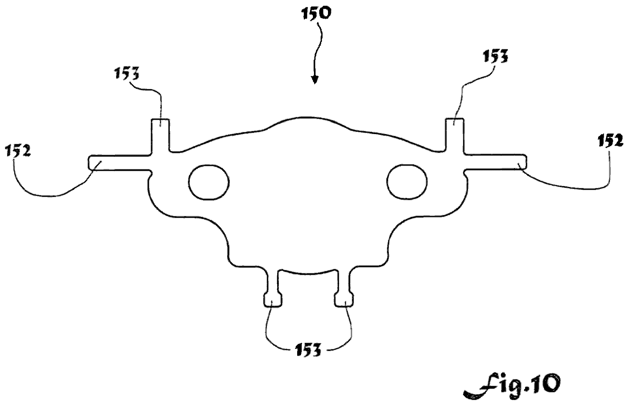

As can be seen in Figure 10, the outer shim comprises a planar main body with bent tangs or fingers protruding from the edges to define the material for two resilient clips 152 and four fixing clips 153, two arranged at the top and two at the bottom end. The sheet is folded to form the two resilient clips and the fixing clips as shown in Figures 6 to 9. The fixing of the outer shim to the backing plate is shown in Figures 3 to 5 and Figures 11-13. The clips 152 and 153 hold the outer shim on the back plate 120 surrounding its side edges as illustrated in Fig.5 allowing the above described tangential sliding of the brake pad backing plate onto the abutment sections at low brake pressures wherein the resilient clips elastically deflects.

The outer shim 150 therefore has a side to side self centering spring feature provided by the resilient clips 152 acting on the back plate 120 to centralize the outer shim 150 relative to the backing plate and maintain a gap between any tangentially rigid part of the shim- including any rigid part of the clip. The higher friction interface, rubber covered side 151 of outer shim 150 to hydraulically and/or electromechanically driven piston 4 or caliper housing contact means 6 maintains position of outer shim 150 relative to them when the brake is applied and the pad 100 slides on the lower friction shim interface in sliding contact with the damping shim to the bracket abutment means 21, 22 deflecting the resilient clips 152.

When the brake is released the resilient clips 152 returns the outer shim 150 to a centralized position thus maintaining gap between fixing clip 153 and back plate profile 120.

Resilient clip 152 geometry is designed such that spring force when deflected is only sufficient to centralize and offers minimal resistance to pad movement.

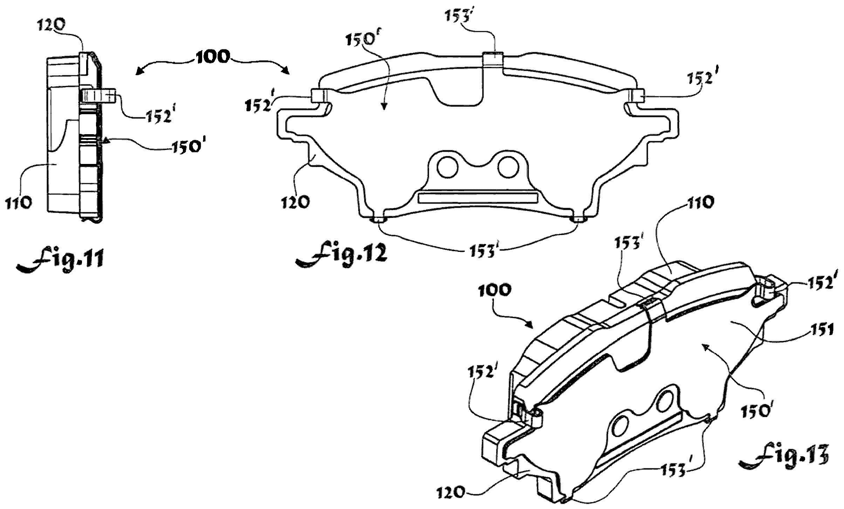

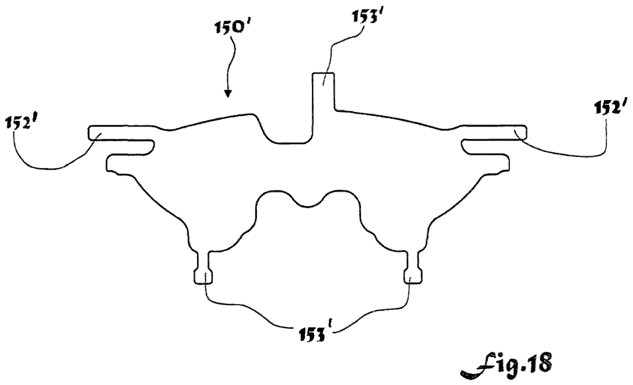

A second embodiment of a brake pad assembly that can be used with a brake caliper of the kind shown in Figure 1 is illustrated in Figures 11 to 18 of the accompanying drawings. The brake pad assembly differs from the first embodiment in the shape of the outer shim 150'. In this embodiment the outer shim 150' comprises again a planar main body made of sheet metal showing at each side of the shim two resilient clips 152' and three fixing clips 153', one arranged at the top and two at the bottom end which hold the outer shim on the back plate 120 surrounding its side edges as illustrated in Fig.13 allowing the above described tangential sliding at low brake pressures wherein the resilient clips 152' deflects.

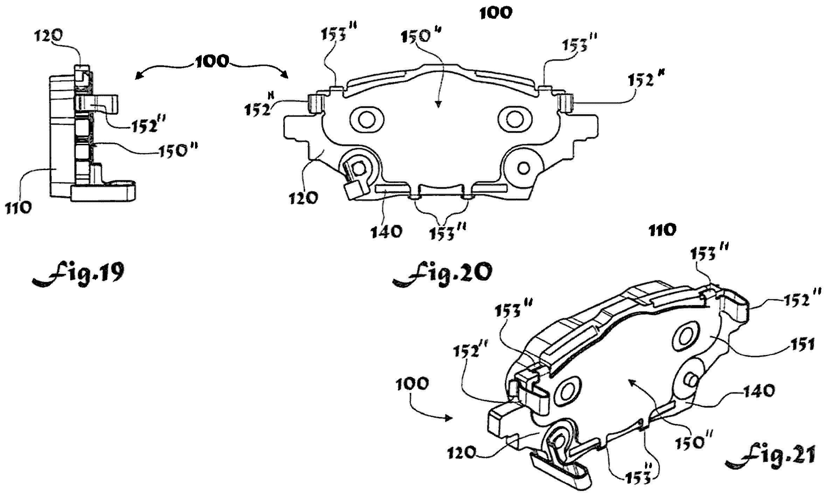

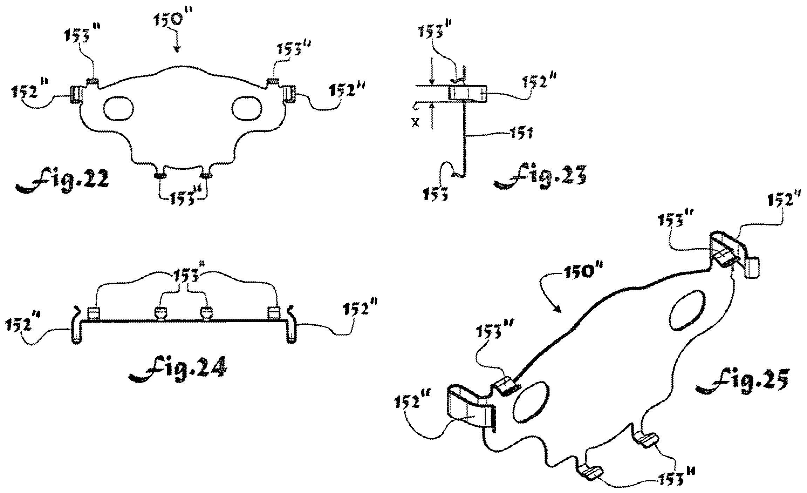

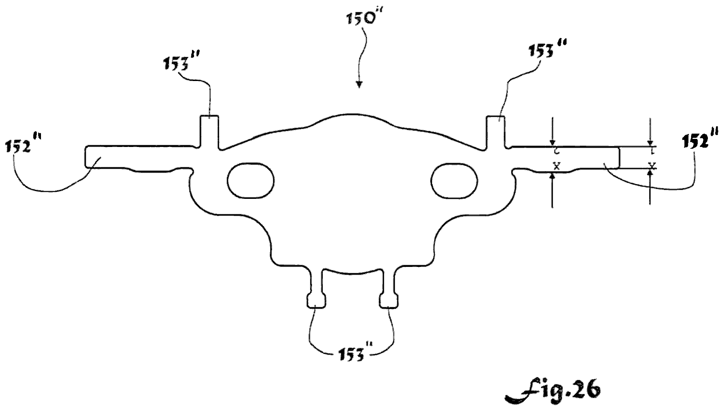

A modified version of the brake pad assembly of the first embodiment is illustrated in Figures 19 to 26 of the accompanying drawings. This comprises again a body made of sheet metal showing at each side of the shim two more robust resilient clips 152" where at least one section X2 is of a bigger dimension than before (X1/Fig.7) and four fixing clips 153", two arranged at the top and two at the bottom end which hold the cover shim on the back plate 120 surrounding its side edges as illustrated in Fig.21 allowing the above described sliding at low brake pressures wherein the resilient clips 152" elastically deflects. In this modified version, the 152 clips are longer to increase deflection range and keep stress within elastic limit, but this also reduces clip force on backplate when compared with the preceding embodiment. To restore the force back to the target this embodiment includes an increased dimension X2.

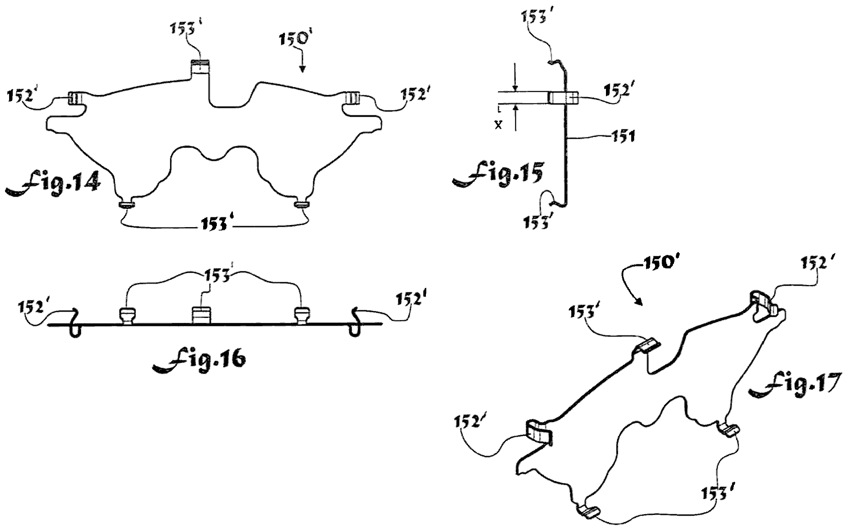

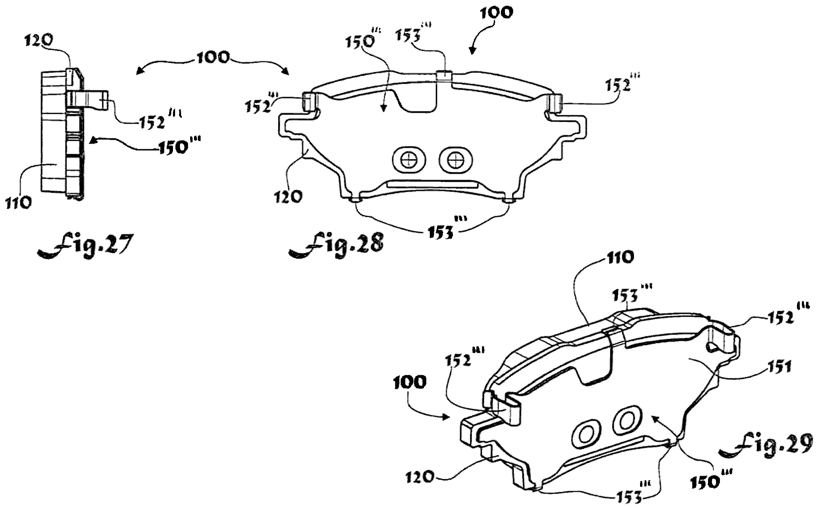

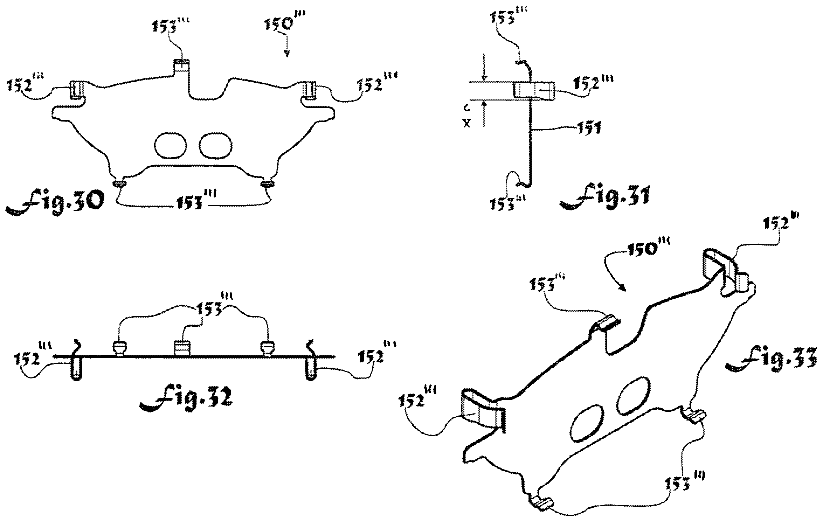

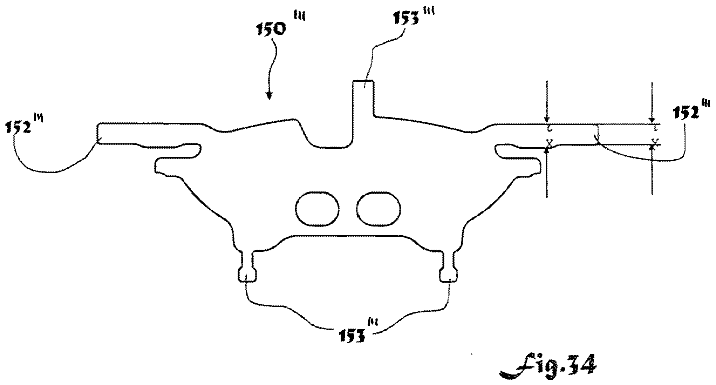

A modified version of the brake pad assembly of the second embodiment is illustrated in Figures 27 to 34 of the accompanying drawings. This comprises again a main body made of sheet metal showing at each side of the shim two more robust resilient clips 152‴ where at least one section X2 is of a bigger dimension than before (X1/Fig.15) and three fixing clips 153", one arranged at the top and two at the bottom end which hold the outer shim on the back plate 120 surrounding its side edges as illustrated in Fig.13 allowing the above described sliding at low brake pressures wherein the resilient clips 152‴ deflects.

## Claims

1. A hydraulic brake caliper assembly comprising a support bracket (2), a caliper, a pair of spaced apart brake pad assemblies, each brake pad assembly comprising a backing plate and a brake pad of friction material secured to the backing plate, at least one piston (4) which in use acts upon one of the brake pad assemblies to urge the brake pad into engagement with a surface of the brake disc (5), further in which the support bracket (2) includes a pair of abutment sections (21, 22) associated with each brake pad assembly that are located so that during frictional engagement of the brake pad with a rotating brake disc (5) one of the abutment sections (21, 22) abuts the backing plate of the brake pad to transfer reaction forces applied to the brake pads by the brake disc (5) into the caliper, and in which at least one of the brake pad assemblies further comprises an inner shim secured to the back face of the backing plate that faces away from the brake pad, and an outer shim (150) that overlays the inner shim and is secured to the backing plate by a plurality of resilient clips (152), in which the resilient clips (152) are so constructed and arranged to resiliently deflect in use to permit tangential movement of the backing plate relative to the outer shim (150) whilst the backing plate is engaged with at least one of the resilient clips (152) so as to provide a degree of self centering of the outer shim (150) relative to the backing plate within an allowable range of movement, and further in which the resilient clips (152) are sufficiently resilient as to allow, during braking, for the backing plate to move to contact an abutment section, from any start position, without requiring any movement of the outer shim (150) relative to the piston (4) or reaction surface of the caliper, **characterized in that** the inner shim is secured such that it is not able to move radially or tangentially relative to the backing plate.

2. A hydraulic brake caliper assembly according to claim 1 in which the resilient clips (152) are configured in use to allow the backing plate to move over a range of tangential positions relative to the outer shim (150), and in which the resilient clips (152) are arranged such that when the brake pad is not being urged into frictional engagement with the brake disc (5) the outer shim (150) is actively urged by the resilient clips (152) into a predetermined position that lies between the ends of the available range of tangential positions.

3. A hydraulic brake caliper assembly according to claim 2 in which the predetermined position may be one in which any additional fixing clips provided on the outer shim (150) at the top or bottom edge are spaced apart from any radial projections of the backing plate.

4. A hydraulic brake caliper assembly according to any of preceding claims in which at least one resilient clip is provided at each end of the backing plate, and both of the clips contact the backing plate at all times.

5. A hydraulic brake caliper assembly according to any of preceding claims in which the range of movement achievable while resiliently deflecting the clips is at least equal to the available tangential range of positions of the backing plate between the abutment sections (21, 22) of the caliper.

6. A hydraulic brake caliper assembly according to any of preceding claims in which the resilient clips (152) generate forces that are balanced so that the outer shim (150) is to a degree partially or perfectly centralized relative to the backing plate within the available range of position regardless of the relative tangential position of the backing plate and the abutments of the caliper.

7. A hydraulic brake caliper assembly according to any of preceding claims in which the resilient clips (152) each provide a resistance to tangential movement of the outer shim (150) relative to the backing plate of less than the frictional force between the outer shim (150) and the piston (4), or outer shim (150) and reaction surface of the caliper.

8. A hydraulic brake caliper assembly according to any of preceding claims in which the outer shim (150) comprises a metal plate defining a planar main body and the resilient clips (152) each comprise protruding metal fingers that each extend out of the plane of the generally planar main body of the shim towards the brake disc (5) to engage with edge portions of the backing plate.

9. A hydraulic brake caliper assembly according to any of preceding claims in which there is one resilient clip opposing tangential movement of the cover shim in each of the two opposed tangential directions. i.e. for forward and backwards rotation of the brake disc (5).

10. A hydraulic brake caliper assembly according to any one of claims 1 to 8 in which there are two resilient clips (152) opposing tangential movement in a forward direction and two resilient clips (152) opposing tangential movement in a backwards direction.

11. A hydraulic brake caliper assembly according to any of preceding claims in which each of the resilient clips (152) comprise a root portion that is connected at one end to the main body of the outer shim (150) and extends away from the main body of the outer shim (150) in a direction away from the backing plate and then turns back on itself to extend back past the main body to form a contact portion that protrudes from the main body in a direction towards the backing plate.

12. A hydraulic brake caliper assembly according to claim 11 in which the root portion extends generally orthogonally away from the main body of the outer shim (150) in a direction away from the backing plate before the clip turns back on itself to extend in a direction towards the backing plate to define two leaf springs.

13. A hydraulic brake caliper assembly according to claim 11 or claim 12 in which the contact portion is straight or may include one or more folds defining changes in direction where the folds make a relatively insignificant contribution to the ability of the contact portion to deflect, the major source of deflection being resilient bending of the clip along its length.

14. A hydraulic brake caliper assembly according to any one of claims 11 to 13 in which the width of the resilient clip in the region where the root portion transitions into the contact portion is greater than the width of the contact portion.

15. A hydraulic brake caliper assembly according to any of preceding claims in which the outer shim (150) includes upper and lower clips that prevent the shim from separating from the pad during fitting of the brake pads.

16. A hydraulic brake caliper assembly according to any of preceding claims in which the inner shim comprises a plate that is provided with a low friction PTFE or stainless steel face.

17. A hydraulic brake caliper assembly according to any of preceding claims in which the inner shim is secured to the backing plate by an adhesive and/or by rivets or other fasteners.

18. A hydraulic brake caliper assembly according to any of preceding claims in which the outer shim (150) comprises a rigid plate, for instance a metal plate, with a low friction PTFE or a stainless steel surface that abuts a damping shim.

19. A hydraulic brake caliper assembly according any of preceding claims in which a resilient layer, for instance of rubber, is provided that is located between the rigid sheet of the outer shim (150) and the piston (4) or caliper housing contact area to help the outer shim (150) to grip the piston (4) yet allow some movement of the outer shim (150) relative to the piston (4) under the forces of the resilient clips (152) when the brakes are not being applied.

20. A hydraulic brake caliper assembly according to any of preceding claims in which the outer shim (150) comprises a thin metal sheet, with the resilient clips (152) being formed by parts of the metal sheet deformed out of the plane of the body of the sheet.

21. A hydraulic brake caliper assembly according to claim 20 in which the sheet comprises a sheet of austenitic stainless steel or an equivalent material.

22. A hydraulic brake caliper assembly according to any of preceding claims further includes additional fixing clips that locate the outer shim (150) at one or more of the top and the bottom of the backing plate.

23. A hydraulic brake caliper assembly according to claim 22 in which the root of each of the fixing clips extends from the main body of the cover shim directly towards the backing plate.

24. A hydraulic brake caliper assembly according to any of preceding claims in which the brake assembly comprises a sliding caliper type disc brake in which the caliper is slidingly secured to the support bracket (2) by an axially moveable guide system.

25. A hydraulic brake caliper assembly according to claim 24 in which the guide system of the brake assembly comprises two or more guide pins fixed to the caliper which each extend, when the caliper is mounted to the support bracket (2), into a respective axially extending guide bore arranged in the support bracket (2).

## Patentansprüche

1. Hydraulische Bremssattelanordnung, umfassend einen Bremsflansch (2), einen Bremssattel, ein Paar von beabstandeten Bremsbelaganordnungen, wobei jede Bremsbelaganordnung eine Trägerplatte und einen Bremsbelag aus einem Reibwerkstoff, der an der Trägerplatte befestigt ist, umfasst, mindestens einen Kolben (4), der im Gebrauch auf eine der Bremsbelaganordnungen einwirkt, um den Bremsbelag in Eingriff mit einer Oberfläche der Bremsscheibe (5) zu drängen, wobei der Bremsflansch (2) ferner ein Paar von Anschlagabschnitten (21, 22) umfasst, die jeder Bremsbelaganordnung zugeordnet sind und derart angeordnet sind, dass während eines Reibeingriffs des Bremsbelags mit einer drehenden Bremsscheibe (5) einer der Anschlagabschnitte (21, 22) an der Trägerplatte des Bremsbelags anschlägt, um Reaktionskräfte, die von der Bremsscheibe (5) auf den Bremsbelag ausgeübt werden, auf den Bremssattel zu übertragen, und wobei mindestens eine der Bremsbelaganordnungen ferner eine innere Ausgleichscheibe, die an der Rückseite der Trägerplatte befestigt ist, die von dem Bremsbelag abgewandt ist, und eine äußere Ausgleichscheibe (150), die der inneren Ausgleichscheibe überlagert ist und an der Trägerplatte durch eine Vielzahl von elastischen Klemmen (152) befestigt ist, umfasst, wobei die elastischen Klemmen (152) derart aufgebaut und eingerichtet sind, dass sie sich im Gebrauch elastisch biegen, um eine tangentiale Bewegung der Trägerplatte im Verhältnis zu der äußeren Ausgleichscheibe (150) zu erlauben, während die Trägerplatte mit mindestens einer der elastischen Klemmen (152) in Eingriff steht, um eine gewisse Selbstzentrierung der äußeren Ausgleichscheibe (150) im Verhältnis zu der Trägerplatte innerhalb eines annehmbaren Bewegungsbereichs bereitzustellen, und wobei ferner die elastischen Klemmen (152) elastisch genug sind, um es während des Bremsens der Trägerplatte zu erlauben, sich zu bewegen, um einen Anschlagabschnitt zu kontaktieren, von einer beliebigen Startposition aus, ohne irgendeine Bewegung der äußeren Ausgleichscheibe (150) im Verhältnis zum Kolben (4) oder zur Reaktionsfläche des Bremssattels zu benötigen,
**dadurch gekennzeichnet, dass** die innere Ausgleichscheibe derart befestigt ist, dass sie sich nicht radial oder tangential im Verhältnis zu der Trägerplatte bewegen kann.

2. Hydraulische Bremssattelanordnung nach Anspruch 1, wobei die elastischen Klemmen (152) dazu konfiguriert sind, es im Gebrauch der Trägerplatte zu erlauben, sich über einen Bereich von tangentialen Positionen im Verhältnis zu der äußeren Ausgleichscheibe (150) zu bewegen, und wobei die elastischen Klemmen (152) derart eingerichtet sind, dass wenn der Bremsbelag nicht in Reibeingriff mit der Bremsscheibe (5) gedrängt wird, die äußere Ausgleichscheibe (150) von den elastischen Klemmen (152) aktiv in eine vorbestimmte Position gedrängt wird, die zwischen den Enden des verfügbaren Bereichs tangentialer Positionen liegt.

3. Hydraulische Bremssattelanordnung nach Anspruch 2, wobei die vorbestimmte Position derart sein kann, dass beliebige weitere Befestigungsklemmen, die an der äußeren Ausgleichscheibe (150) am oberen oder unteren Rand bereitgestellt werden, von beliebigen radialen Vorsprüngen der Trägerplatte beabstandet sind.

4. Hydraulische Bremssattelanordnung nach einem der vorhergehenden Ansprüche, wobei mindestens eine elastische Klemme an jedem Ende der Trägerplatte bereitgestellt wird, und die beiden Klemmen jederzeit in Kontakt mit der Trägerplatte stehen.

5. Hydraulische Bremssattelanordnung nach einem der vorhergehenden Ansprüche, wobei der Bewegungsbereich, der während einer elastischen Biegung der Klemmen erreichbar ist, mindestens gleich dem verfügbaren Bereich tangentialer Positionen der Trägerplatte zwischen den Anschlagabschnitten (21, 22) des Bremssattels ist.

6. Hydraulische Bremssattelanordnung nach einem der vorhergehenden Ansprüche, wobei die elastischen Klemmen (152) Kräfte generieren, die derart ausgeglichen sind, dass die äußere Ausgleichscheibe (150) bis zu einem gewissen Grad teilweise oder vollständig im Verhältnis zur Trägerplatte innerhalb des möglichen Positionsbereichs zentriert ist, unabhängig von der relativen tangentialen Position der Trägerplatte und der Anschläge des Bremssattels.

7. Hydraulische Bremssattelanordnung nach einem der vorhergehenden Ansprüche, wobei die elastischen Klemmen (152) jeweils einen Widerstand gegen die tangentiale Bewegung der äußeren Ausgleichscheibe (150) im Verhältnis zu der Trägerplatte bereitstellen, der geringer als die Reibkraft zwischen der äußeren Ausgleichscheibe (150) und dem Kolben (4) oder der äußeren Ausgleichscheibe (150) und der Reaktionsfläche des Bremssattels ist.

8. Hydraulische Bremssattelanordnung nach einem der vorhergehenden Ansprüche, wobei die äußere Ausgleichscheibe (150) eine Metallplatte umfasst, die einen ebenen Hauptkörper definiert, und die elastischen Klemmen (152) jeweils vorstehende metallische Finger umfassen, dies sich jeweils aus der Ebene des im Allgemeinen ebenen Hauptkörpers der Ausgleichscheibe in Richtung auf die Bremsscheibe (5) heraus erstrecken, um mit Randteilen der Trägerplatte in Eingriff zu kommen.

9. Hydraulische Bremssattelanordnung nach einem der vorhergehenden Ansprüche, wobei es eine elastische Klemme gibt, die der tangentialen Bewegung der Abdeckscheibe in jeder der beiden entgegengesetzten tangentialen Richtungen, d. h. für eine Vorwärts- und Rückwärtsdrehung der Bremsscheibe (5), entgegenwirkt.

10. Hydraulische Bremssattelanordnung nach einem der Ansprüche 1 bis 8, wobei es zwei elastische Klemmen (152), die der tangentialen Bewegung in einer Vorwärtsrichtung entgegenwirken, und zwei elastische Klemmen (152), die der tangentialen Bewegung in einer Rückwärtsrichtung entgegenwirken, gibt.

11. Hydraulische Bremssattelanordnung nach einem der vorhergehenden Ansprüche, wobei jede der elastischen Klemmen (152) einen Fußteil umfasst, der an einem Ende mit dem Hauptkörper der äußeren Ausgleichscheibe (150) verbunden ist und sich von dem Hauptkörper der äußeren Ausgleichscheibe (150) in einer Richtung von der Trägerplatte weg entfernt, und dann auf sich selbst zurückkehrt, um sich zurück an dem Hauptkörper vorbei zu erstrecken, um einen Kontaktteil zu bilden, der von dem Hauptkörper in einer Richtung zur Trägerplatte hin vorsteht.

12. Hydraulische Bremssattelanordnung nach Anspruch 11, wobei der Fußteil sich im Allgemeinen orthogonal von dem Hauptkörper der äußeren Ausgleichscheibe (150) in einer Richtung von der Trägerplatte weg entfernt, bevor die Klemme wieder auf sich selbst zurückkehrt, um sich in einer Richtung zur Trägerplatte hin zu erstrecken, um zwei Blattfedern zu definieren.

13. Hydraulische Bremssattelanordnung nach Anspruch 11 oder Anspruch 12, wobei der Kontaktteil gerade ist oder eine oder mehrere Knicke umfassen kann, die Richtungsänderungen definieren, wobei die Knicke einen relativ unerheblichen Beitrag zur Biegefähigkeit des Kontaktteils beisteuern, wobei die Hauptbiegequelle das elastische Biegen der Klemme über ihre Länge ist.

14. Hydraulische Bremssattelanordnung nach einem der Ansprüche 11 bis 13, wobei die Breite der elastischen Klemme in der Region, in welcher der Fußteil in den Kontaktteil übergeht, größer als die Breite des Kontaktteils ist.

15. Hydraulische Bremssattelanordnung nach einem der vorhergehenden Ansprüche, wobei die äußere Ausgleichscheibe (150) obere und untere Klemmen umfasst, die verhindern, dass sich die Ausgleichscheibe von dem Belag währen des Einpassens der Bremsbeläge trennt.

16. Hydraulische Bremssattelanordnung nach einem der vorhergehenden Ansprüche, wobei die innere Ausgleichscheibe eine Platte umfasst, die mit einer Seite aus reibungsarmen PTFE oder aus Edelstahl versehen ist.

17. Hydraulische Bremssattelanordnung nach einem der vorhergehenden Ansprüche, wobei die innere Ausgleichscheibe an der Trägerplatte mit einem Klebstoff und/oder mit Nieten oder anderen Befestigungsmitteln befestigt ist.

18. Hydraulische Bremssattelanordnung nach einem der vorhergehenden Ansprüche, wobei die äußere Ausgleichscheibe (150) eine starre Platte umfasst, beispielsweise eine metallische Platte, mit einer Oberfläche aus reibungsarmen PTFE oder Edelstahl, die an einer Dämpfungsscheibe zur Anlage kommt.

19. Hydraulische Bremssattelanordnung nach einem der vorhergehenden Ansprüche, wobei eine elastische Schicht, beispielsweise Gummi, bereitgestellt wird, die sich zwischen dem starren Blech der äußeren Ausgleichscheibe (150) und dem Kolben (4) oder der Kontaktzone des Bremssattelgehäuses befindet, um der äußeren Ausgleichscheibe (150) dabei zu helfen, den Kolben (4) zu ergreifen und dabei eine gewisse Bewegung der äußeren Ausgleichscheibe (150) im Verhältnis zu dem Kolben (4) unter der Einwirkung der Kräfte der elastischen Klemmen (152) zu erlauben, wenn die Bremsen nicht angezogen sind.

20. Hydraulische Bremssattelanordnung nach einem der vorhergehenden Ansprüche, wobei die äußere Ausgleichscheibe (150) ein dünnes Metallblech umfasst, wobei die elastischen Klemmen (152) durch Teile des Metallblechs gebildet werden, die aus der Ebene des Körpers des Blechs heraus verformt sind.

21. Hydraulische Bremssattelanordnung nach Anspruch 20, wobei das Blech ein Blech aus austenitischem Edelstahl oder einem gleichwertigen Werkstoff umfasst.

22. Hydraulische Bremssattelanordnung nach einem der vorhergehenden Ansprüche, ferner umfassend zusätzliche Befestigungsklammern, welche die äußere Ausgleichscheibe (150) in einer oder mehreren von dem Oberteil und dem Unterteil der Trägerplatte positionieren.

23. Hydraulische Bremssattelanordnung nach Anspruch 22, wobei sich der Fuß jeder der Befestigungsklemmen von dem Hauptkörper der Abdeckscheibe aus direkt in Richtung auf die Trägerplatte erstreckt.

24. Hydraulische Bremssattelanordnung nach einem der vorhergehenden Ansprüche, wobei die Bremsanordnung eine Scheibenbremse mit gleitendem Bremssattel umfasst, wobei der Bremssattel gleitend an dem Bremsflansch (2) durch ein axial bewegliches Führungssystem befestigt ist.

25. Hydraulische Bremssattelanordnung nach Anspruch 24, wobei das Führungssystem der Bremsanordnung zwei oder mehrere Führungsstifte umfasst, die an dem Bremssattel befestigt sind und sich, wenn der Bremssattel an dem Bremsflansch (2) montiert ist, jeweils in eine jeweilige, sich axial erstreckende Führungsbohrung, die in dem Bremsflansch (2) angeordnet ist, erstrecken.

## Revendications

1. Ensemble d'étrier de frein hydraulique, comprenant un flasque de support (2), un étrier, une paire d'ensembles de plaquettes de frein espacés, chaque ensemble de plaquettes de frein comprenant un plateau de frein et une plaquette de frein en matériau de friction fixée au plateau de frein, au moins un piston (4) qui en cours d'utilisation agit sur l'un des ensembles de plaquettes de frein pour pousser la plaquette de frein en prise avec une surface du disque de frein (5), dans lequel en outre le flasque de support (2) comprend une paire de sections de butée (21, 22) associées à chaque ensemble de plaquettes de frein et qui sont situées de telle sorte que pendant une mise en prise par friction de la plaquette de frein avec un disque de frein rotatif (5), l'une des sections de butée (21, 22) vient en butée contre le plateau de frein de la plaquette de frein pour transférer dans l'étrier des forces de réaction appliquées aux plaquettes de frein par le disque de frein (5), et dans lequel au moins l'un des ensembles de plaquettes de frein comprend en outre une cale intérieure fixée à la face arrière du plateau de frein qui est détournée de la plaquette de frein, et une cale extérieure (150) qui est superposée à la cale intérieure et est fixée au plateau de frein par une pluralité d'attaches élastiques (152), dans lequel les attaches élastiques (152) sont construites et agencées de telle sorte qu'elles fléchissent de manière élastique en cours d'utilisation pour permettre un mouvement tangentiel du plateau de frein par rapport à la cale extérieure (150) pendant que le plateau de frein est en prise avec au moins l'une des attaches élastiques (152) de façon à fournir un degré d'auto-centrage de la cale extérieure (150) par rapport au plateau de frein à l'intérieur d'une plage de mouvement admissible, et dans lequel en outre les attaches élastiques (152) sont suffisamment élastiques pour permettre, pendant le freinage, au plateau de frein de se déplacer pour entrer en contact avec une section de butée, à partir d'une position de démarrage quelconque, sans nécessiter aucun mouvement de la cale extérieure (150) par rapport au piston (4) ou à la surface de réaction de l'étrier,
**caractérisé en ce que** la cale intérieure est fixée de telle sorte qu'elle ne peut pas se déplacer radialement ou tangentiellement par rapport au plateau de frein.

2. Ensemble d'étrier de frein hydraulique selon la revendication 1, dans lequel les attaches élastiques (152) sont configurées en cours d'utilisation pour permettre au plateau de frein de se déplacer sur une plage de positions tangentielles par rapport à la cale extérieure (150), et dans lequel les attaches élastiques (152) sont agencées de telle sorte que lorsque la plaquette de frein n'est pas poussée en prise par friction avec le disque de frein (5), la cale extérieure (150) est poussée activement par les attaches élastiques (152) dans une position prédéterminée qui se trouve entre les extrémités de la plage disponible de positions tangentielles.

3. Ensemble d'étrier de frein hydraulique selon la revendication 2, dans lequel la position prédéterminée peut être telle que toutes les attaches de fixation supplémentaires fournies sur la cale extérieure (150) au bord supérieur ou inférieur sont espacées de toutes les projections radiales du plateau de frein.

4. Ensemble d'étrier de frein hydraulique selon l'une quelconque des revendications précédentes, dans lequel au moins une attache élastique est fournie à chaque extrémité du plateau de frein, et les deux attaches sont à tout moment en contact avec le plateau de frein.

5. Ensemble d'étrier de frein hydraulique selon l'une quelconque des revendications précédentes, dans lequel la plage de mouvement pouvant être atteinte pendant un fléchissement élastique des attaches est au moins égale à la plage disponible de positions tangentielles du plateau de frein entre les sections de butée (21, 22) de l'étrier.

6. Ensemble d'étrier de frein hydraulique selon l'une quelconque des revendications précédentes, dans lequel les attaches élastiques (152) génèrent des forces qui sont équilibrées de sorte que la cale extérieure (150) est à un certain degré partiellement ou parfaitement centrée par rapport au plateau de frein à l'intérieur de la plage de positions disponible, indépendamment de la position tangentielle relative du plateau de frein et des butées de l'étrier.

7. Ensemble d'étrier de frein hydraulique selon l'une quelconque des revendications précédentes, dans lequel les attaches élastiques (152) fournissent chacune une résistance au mouvement tangentiel de la cale extérieure (150) par rapport au plateau de frein qui est inférieure à la force de friction entre la cale extérieure (150) et le piston (4), ou la cale extérieure (150) et la surface de réaction de l'étrier.

8. Ensemble d'étrier de frein hydraulique selon l'une quelconque des revendications précédentes, dans lequel la cale extérieure (150) comprend une plaque métallique définissant un corps principal plat, et les attaches élastiques (152) comprennent chacune des doigts métalliques en saillie qui s'étendent chacun hors du plan du corps principal généralement plat de la cale en direction du disque de frein (5) pour venir en prise avec des parties de bord du plateau de frein.

9. Ensemble d'étrier de frein hydraulique selon l'une quelconque des revendications précédentes, dans lequel il existe une attache élastique s'opposant au mouvement tangentiel de la cale de recouvrement dans chacune des deux directions tangentielles opposées, c'est-à-dire pour une rotation avant et arrière du disque de frein (5).

10. Ensemble d'étrier de frein hydraulique selon l'une quelconque des revendications 1 à 8, dans lequel il existe deux attaches élastiques (152) s'opposant au mouvement tangentiel dans une direction vers l'avant et deux attaches élastiques (152) s'opposant au mouvement tangentiel dans une direction vers l'arrière.

11. Ensemble d'étrier de frein hydraulique selon l'une quelconque des revendications précédentes, dans lequel chacune des attaches élastiques (152) comprend une partie de pied qui est connectée au niveau d'une extrémité au corps principal de la cale extérieure (150) et s'écarte du corps principal de la cale extérieure (150) dans une direction s'éloignant du plateau de frein et revient ensuite sur elle-même pour s'étendre à nouveau devant au-delà du corps principal afin de former une partie de contact qui fait saillie à partir du corps principal dans une direction vers le plateau de frein.

12. Ensemble d'étrier de frein hydraulique selon la revendication 11, dans lequel la partie de pied s'écarte de manière généralement orthogonale du corps principal de la cale extérieure (150) dans une direction s'éloignant du plateau de frein avant que l'attache ne revienne sur elle-même pour s'étendre dans une direction vers le plateau de frein pour définir deux ressorts à lame.

13. Ensemble d'étrier de frein hydraulique selon la revendication 11 ou la revendication 12, dans lequel la partie de contact est droite ou peut comprendre un ou plusieurs coudes définissant des changements de direction, dans lequel les coudes apportent une contribution relativement insignifiante à la capacité de fléchissement de la partie de contact, la principale source de fléchissement étant le pliage élastique de l'attache sur sa longueur.

14. Ensemble d'étrier de frein hydraulique selon l'une quelconque des revendications 11 à 13, dans lequel la largeur de l'attache élastique dans la région où la partie de pied passe à la partie de contact est supérieure à la largeur de la partie de contact.

15. Ensemble d'étrier de frein hydraulique selon l'une quelconque des revendications précédentes, dans lequel la cale extérieure (150) comprend des attaches supérieures et inférieures qui empêchent la cale de se séparer de la plaquette pendant la mise en place des plaquettes de frein.

16. Ensemble d'étrier de frein hydraulique selon l'une quelconque des revendications précédentes, dans lequel la cale intérieure comprend une plaque qui est pourvue d'une face en PTFE basse friction ou en acier inoxydable.

17. Ensemble d'étrier de frein hydraulique selon l'une quelconque des revendications précédentes, dans lequel la cale intérieure est fixée au plateau de frein par un adhésif et/ou des rivets ou d'autres dispositifs de fixation.

18. Ensemble d'étrier de frein hydraulique selon l'une quelconque des revendications précédentes, dans lequel la cale extérieure (150) comprend une plaque rigide, par exemple une plaque métallique, ayant une surface en PTFE basse friction ou en acier inoxydable qui vient en butée contre une cale d'amortissement.

19. Ensemble d'étrier de frein hydraulique selon l'une quelconque des revendications précédentes, dans lequel une couche élastique, par exemple du caoutchouc, est fournie qui se trouve entre la tôle rigide de la cale extérieure (150) et le piston (4) ou la zone de contact de boîtier d'étrier pour aider la cale extérieure (150) à saisir le piston (4) tout en permettant un certain mouvement de la cale extérieure (150) par rapport au piston (4) sous l'effet des forces des attaches élastiques (152) lorsque les freins ne sont pas serrés.

20. Ensemble d'étrier de frein hydraulique selon l'une quelconque des revendications précédentes, dans lequel la cale extérieure (150) comprend une tôle métallique mince, les attaches élastiques (152) étant formées par des parties de la tôle métallique déformées hors du plan du corps de la tôle.

21. Ensemble d'étrier de frein hydraulique selon la revendication 20, dans lequel la tôle comprend une tôle d'acier inoxydable austénitique ou d'un matériau équivalent.

22. Ensemble d'étrier de frein hydraulique selon l'une quelconque des revendications précédentes, comprenant en outre des attaches de fixation supplémentaires qui positionnent la cale extérieure (150) au niveau d'une ou plusieurs de la partie supérieure et de la partie inférieure du plateau de frein.

23. Ensemble d'étrier de frein hydraulique selon la revendication 22, dans lequel le pied de chacune des attaches de fixation s'étend du corps principal de la cale de recouvrement directement vers le plateau de frein.

24. Ensemble d'étrier de frein hydraulique selon l'une quelconque des revendications précédentes, dans lequel l'ensemble de frein comprend un frein à disque à étrier coulissant, dans lequel l'étrier est fixé de manière coulissante au flasque de support (2) par un système de guidage axialement mobile.

25. Ensemble d'étrier de frein hydraulique selon la revendication 24, dans lequel le système de guidage de l'ensemble de frein comprend deux ou plusieurs broches de guidage fixées à l'étrier et qui s'étendent chacune, lorsque l'étrier est monté sur le flasque de support (2), dans un alésage de guidage respectif, s'étendant axialement, agencé dans le flasque de support (2).
